# EUROPEAN PATENT APPLICATION

(11) **EP 4 557 524 A1**
(43) Date of publication of application: **21.05.2025**
(21) Application number: 24213017.7
(22) Date of filing: 14.11.2024
(51) Int. Cl.: H01R 4/34, B60R 16/03, H01M 50/50, H01R 4/70, H01R 13/44

(54) **TOUCH-PROTECTED CONTACT PART**

(30) Priority: 16.11.2023 DE 102023132002
(71) Applicant: TE Connectivity Solutions GmbH, 8200 Schaffhausen (CH)
(72) Inventor: BUCHHOLZ, Ron, 8200 Schaffhausen (CH); SCHAEFER, Maik, 8200 Schaffhausen (CH); WOLF, Marcus, 8200 Schaffhausen (CH); EHEIM, Manuel, 8200 Schaffhausen (CH); WEBER, Alexander, 8200 Schaffhausen (CH); HOFFMANN, Bjoern, 8200 Schaffhausen (CH); DISTLER, Patrick, 8200 Schaffhausen (CH)
(74) Representative: Grünecker Patent- und Rechtsanwälte PartG mbB

(57) **Abstract**

Touch-protected contact part (1) for connecting battery modules, wherein the contact part (1) is configured to be connected with a mating contact part (52) in a plugging direction (10), wherein the contact part (1) comprises a contact element (2) made from a first material, a connection element (14) that penetrates the contact element (2) and that is electro-conductively connected with the contact element (2), and a contact housing (24) that holds the contact element (2) and the connection element (14); wherein the connection element (14) is held in the contact housing (24) in a plugging position (30), in which the connection element (14) protrudes from the contact element (2) in the plugging direction (10), and the part of the connection element (14) penetrating the contact element (2) and protruding from the contact element (2) is made from a second material that has a greater electrical resistance than the electrical resistance of the first material.

## Description

The present invention relates to a touch-protected contact part for electrically connecting battery modules, in particular in electric vehicles, wherein the contact part is configured to be connected with a mating contact part. The invention further relates to a contact assembly with such a contact part and a mating contact part.

In an electric vehicle, the battery is the primary source for the drive energy. A battery is typically composed of several battery modules that have to be electrically connected to each other. In addition, the battery has to be connected to the consumer loads of the electric vehicle. The requirements for such connections are high. They must be robustly constructed to withstand high currents as well as vibrations and temperature influences. Furthermore, these connections must be touch-proof so that people are not endangered by the high voltages and currents. Finally, precautions must be taken in order to avoid damaging or disrupting components of the electric vehicle when establishing the connections, for example, through sparking or electric arcs.

The problem underlying the invention is to provide a module connector that meets these requirements.

The present invention solves this problem on the one hand by means of a touch-protected contact part for electrically connecting battery modules, wherein the contact part is configured to be connected with a mating contact part in a plugging direction, wherein the contact part has a contact element made from a first material, a connection element that penetrates the contact element and is electro-conductively connected with the contact element, and a contact housing that holds the contact element and the connection element, wherein the connection element is held in a plugging position relative to the contact housing in which the connection element protrudes from the contact element in the plugging direction, and the part of the connection element penetrating the contact element and protruding from the contact element is made from a second material that has a greater electrical resistance than the electrical resistance of the first material.

The problem is solved on the other hand by a contact assembly with the above-described touch-protected contact part and with a mating contact part, which comprises a mating contact configured to be brought into electrical contact with the contact element, a mating connection element configured to complement the connection element for connecting the contact part and the mating contact part, which is electro-conductively connected with the mating contact, and a mating contact housing in which the contact element and the mating connection element are held.

These solutions allow increased safety for high-current or high-voltage connections, easy handling during assembly and the elimination of an additional pre-charging circuit, which would require more components and increase complexity. Due to its higher electrical resistance, the connection element forms a pre-charging resistance that reduces or even avoids disruptive arcs.

Due to the higher resistance of the connection element material, voltage peaks are reduced when the connection is established. At the same time, due to the connection element protruding from the contact element, it is ensured that one end of an arc is located on the connection element.

The invention can be further improved by the following configurations, each of which is preferred in itself and can be combined with any of the others.

The first and second materials are preferably first-class conductors (German: "Leiter 1. Klasse") and include, for example, metals that have good conductivity.

The first material may contain copper and/or aluminum, or consist of copper and/or aluminum. Both materials are highly conductive, durable, easily moldable, versatile, and cost-effective.

The second material may contain steel or consist of steel. Steel components have a higher melting point and higher electrical resistance, which leads to lower currents and less material removal in the event of sparking.

The connection element may have a screw or be configured as a screw that has a threaded section and a pre-contact pin that adjoins the threaded section in the plugging direction. The pre-contact pin ensures that the connection element makes contact with the mating contact part first and that the thread is not destroyed by an arc. The diameter of the pre-contact pin should be smaller than the core diameter of the threaded section. The length of the pre-contact pin in the longitudinal direction can be between about one third of its diameter and about its diameter or more. The longitudinal axis of the screw, and in particular of the pre-contact pin, is preferably parallel to the plugging direction.

The screw is held by the contact housing so as to be rotatable and can preferably be driven or screwed from outside the contact part. In particular, it has a head with a screw drive, which should be configured to be touch-protected. Furthermore, the screw can have a flange that follows the head in the plugging direction and has a larger diameter than the diameter of the head.

In an alternative configuration, the connection element can have a threaded bush with an internal thread or be configured as a threaded bush. The mating connection element can then comprise a screw.

In a preferred embodiment, the contact element can have a busbar or be configured as a busbar. Alternatively or cumulatively, the contact element can have a contact socket or be configured as a contact socket. It is also possible to have a combination of busbar and contact socket. The advantage of the different options is that the contact part can be adapted to different installation space requirements depending on the application.

A preferred embodiment of the invention can have a touch protection made from an electrically insulating material that surrounds the connection element at its end opposite to the plugging direction. If the connection element is configured as a screw, the touch protection can surround a screw head of the connection element, which allows safe manual assembly.

In one configuration, the connection element can be longer than the contact element and can protrude from the contact element. Alternatively, the connection element can be shorter than the contact element and cannot protrude from the contact element. Accordingly, the mating connection element can be configured complementarily and can, for example, be longer than the mating contact if the connection element is configured to be shorter.

A preferred embodiment of the contact part can comprise a spring element by means of which the connection element is resiliently held in the plugging position along the plugging direction.

The spring element can be supported in particular axially between the contact housing and the connection element. The spring element can be a separate part and can abut against the end facing in the opposite direction to the plugging direction of the connection element. The spring element can abut against the head, in particular the flange, of the connection element. This allows the spring element to generate an axial spring force that presses the connection element into the desired position. The spring element can be a disc spring. The spring element can also be a coil spring, such as a compression spring. The use of springs is cost-efficient and allows easy manufacturing of the contact part.

According to a further configuration, the spring element can be formed monolithically from the contact housing. The spring element can, for example, be configured as a contact tongue, which is radially resiliently engaged with the connection element transversely to and/or in the plugging direction. In this case, the spring element can abut against the connection element via inclined surfaces. The inclined surfaces can convert the radial spring force of the spring element into an axial direction. Such a monolithic spring element is easier to manufacture and simplifies assembly.

A configuration with several spring elements, each in one of the above configurations, is also possible. In particular, the spring elements can be configured in the same way.

In an alternative or cumulative embodiment, the connection element can be held in the contact housing in a frictionally engaged manner, which reduces the number of components and allows easy handling.

Furthermore, the connection element can be overmolded by the housing in order to save assembly steps.

A preferred embodiment of the contact assembly provides that the contact element and the mating connection element be held in the mating contact housing in a touch-protected manner in order to meet safety requirements.

Depending on the configuration of the connection element, the mating connection element can, for example, be a threaded bush if the connection element is a screw. The threaded bush can project towards the connection element against the plugging direction of the mating contact part and can project beyond the surface of the mating contact. Alternatively or cumulatively, the mating contact can have a flat surface and, for example, be formed by the busbar itself.

The mating contact can be made from the first material. The mating connection element can be made from the second material. Thus, the mating contact and the contact element can form a main contact pair made from the same material, and the connection element and the mating connection element can form a pre-contact pair, wherein the pre-contact pair can be electrically connected during the plugging movement of the contact part and mating contact part before the main contact.

The contact part and the mating contact part can have housing sections that can be plugged into each other, through which the contact part and the mating contact part are guided along the plugging direction when plugged together. In particular, the housing sections can be configured in such a way that the contact part and the mating contact part are positively guided when plugged together. With this configuration, the movement transverse to the plugging direction can be blocked by the housing sections.

Furthermore, the contact part and the mating contact part can be configured such that they can be plugged together in a plugging movement extending along the plugging direction, in particular, the contact part and the mating contact part can be configured such that they can be plugged together parallel to the plugging direction.

Along the plugging movement until the contact element and mating contact make contact, the distance between the connection element and the mating connection element can always be smaller than the distance between the contact element and mating contact. The distance between the pre-contact pin and the mating connection element can always be smaller than the distance between the contact socket and the mating contact to ensure initial contact through the pre-contact pair.

Along the plugging movement, electrical contact can be made between the connection element and the mating connection element before making electrical contact between the contact element and the mating contact.

In the following, the invention is described exemplarily by means of an embodiment with reference to the drawings. In this context, the same reference signs are always used in the drawings for elements that correspond to each other in terms of function and/or structure.

In accordance with the description above, a feature of the embodiment can be omitted if the technical effect associated with that feature is irrelevant for a particular application. Conversely, a feature not yet present in the embodiment can also be added to the embodiment in accordance with the description above if the technical effect of the feature to be added is relevant for a particular application.

It is shown by:
- Fig. 1: an illustration of the touch-protected contact part;
- Fig. 2: a sectional view of the touch-protected contact part;
- Fig. 3: an illustration of the contact assembly with the touch-protected contact part and the mating contact part;
- Fig. 4: a sectional view of the first contact between the contact part and the mating contact part; and
- Fig. 5: an illustration of the contact assembly when fully contacted.

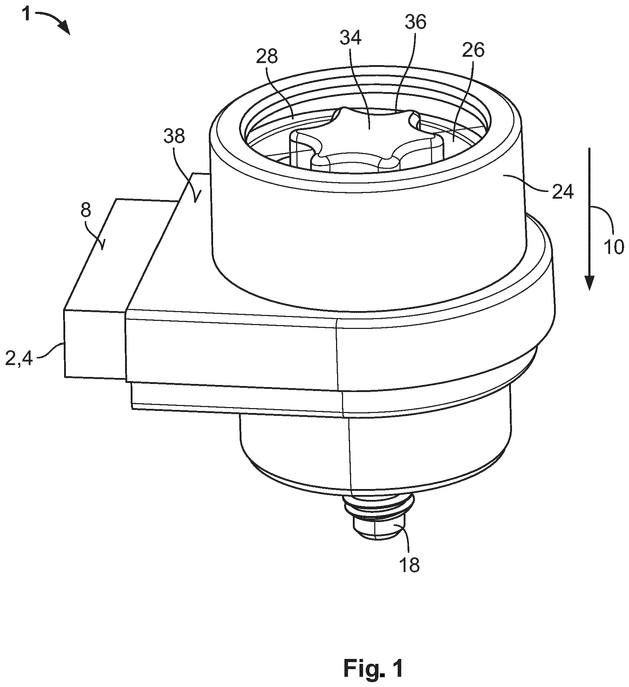

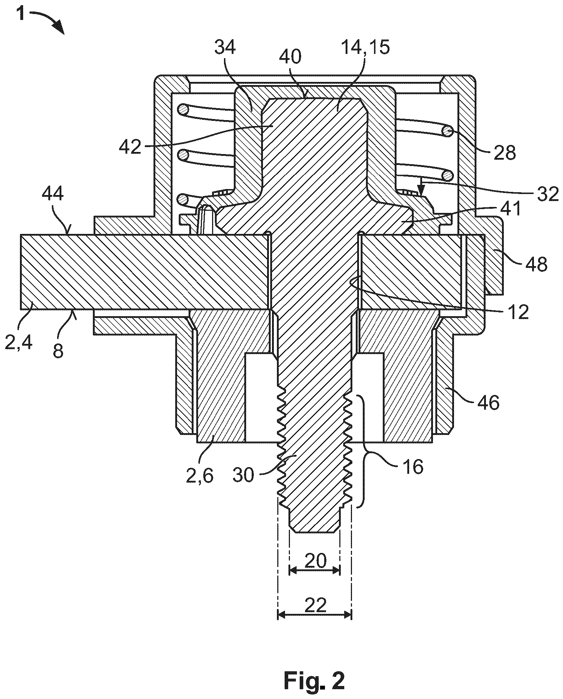

Figs. 1 and 2 show an embodiment of the touch-protected contact part 1.

Fig. 1 shows the touch-protected contact part 1, which has a contact element 2. In this example, the contact element 2 is formed directly from a busbar 4, in particular one end of the busbar 4. The contact element 2 can also be configured as a combination of busbar 4 and contact socket 6. The contact socket 6 can be dispensed with if the busbar 4 itself forms the contact element 2. The busbar 4 can be configured as an elongated plate and can point with a wide longitudinal surface 8 in a plugging direction 10, in which the contact part 1 is connected with a mating contact element (not shown). A connection element 14 is plugged through an opening 12 of the contact element 2 and protrudes out of the contact element 2 in the plugging direction 10.

In a preferred embodiment, the connection element 14 can be configured as a screw 15 with a threaded section 16. A pre-contact pin 18 can extend in the plugging direction 10 on the threaded section 16 of the connection element 14. The diameter 20 of the pre-contact pin 18 can be smaller than the core diameter 22 of the threaded section 16. A length of the pre-contact pin 18 in the plugging direction 10 can be between about a third of its diameter and about its diameter or more.

The contact element 2 and the connection element 14 are surrounded, at least in sections, by a contact housing 24 in a touch-protected manner. The contact housing 24 can be configured monolithically. The contact housing 24 can also consist of several parts. The contact housing 24 has a through-opening 26 through which the connection element 14 is plugged and through which the connection element 14 protrudes in the plugging direction 10 out of the contact housing 24. The through-opening 26 of the contact housing 24 and the opening 12 of the contact element 2 can be aligned coaxially with one another or can be configured so as to overlap at least partially, so that the connection element can be guided through both openings 26, 12.

The contact housing 24 can also have a spring element 28 that holds the connection element 14 in a plugging position 30 in which it protrudes from the contact socket 6 in the plugging direction. This is intended to allow the connection element 14 to contact the mating contact part earlier than the contact element 2.

The spring element 28 in particular generates a spring force 32 in order to hold the plugging position 30. In this case, the spring element 28 can be configured as a compression spring, for example as a coil spring or as a disc spring. In a further preferred configuration, the spring element 28 can be part of the contact housing 24 and in particular can be configured monolithically by the same. In such a case, the spring element 28 can be configured as a resilient contact tongue or clamping lug. Instead of a spring element 28, the connection element 14 can also be held in the contact housing 24 in a frictionally engaged manner.

In the configuration shown in Fig. 1, the touch-protected contact part 1 has a touch protection 34, which is mounted or sprayed onto the connection element 14 at its end located opposite the plugging direction and has a screw drive 36 that is used for manual assembly. The touch protection 34 can be located on the non-contacting side 38 of the contact part 1, that is, at the end 40 of the connection element 14 opposite the plugging direction 10.

Fig. 2 shows a sectional view of the touch-protected contact part 1, in which an embodiment of the connection element 14 is shown as a screw with a flange 41 and/or a screw head 42 at the non-contacting end 40 of the connection element 14, wherein the screw head 42 rests on the surface 44 of the busbar 4 of the contact element 2 on the non-contacting side 38. The touch protection 34 thereby surrounds the screw head 42 and is pressed into the plugging position 30 by the spring element 28, which is located between the contact housing 24 and the touch protection 34 or the connection element 14. In this case, the spring element abuts against the flange 41, the diameter of which is larger than the diameter of the screw head 42 and which immediately follows the screw head 42 in the plugging direction.

The contact element 2 is shown in Fig. 2 as a connection between the busbar 4 and the contact socket 6, wherein the connection element 14 is first plugged through the busbar 4 and then through the contact socket 6 in the plugging direction 10 and protrudes from the contact socket 6. All three elements are electro-conductively connected to one another in the touch-protected contact part.

The connection element 14 is made from a different material than the contact element 2. Thus, the connection element 14 can be made of steel and the contact element 2 can be made of copper. In this preferred embodiment, the contact housing 24 is divided into two in the plugging direction, and in one half 46 it holds the contact socket 6 on the busbar 4. The spring element 28 can be located in the other half 48.

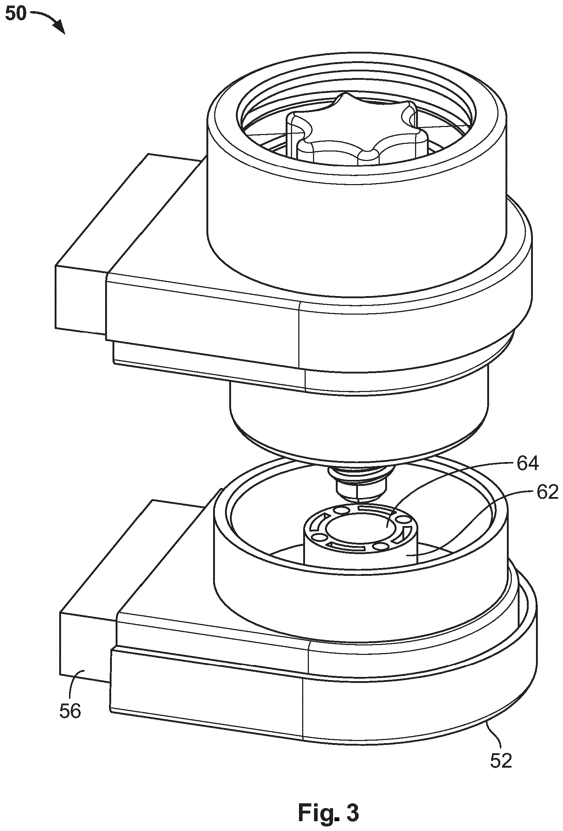

Figs. 3 to 5 show the contact assembly 50 with the touch-protected contact part 1 and the mating contact part 52.

Fig. 3 shows the touch-protected contact assembly 50 before contact is made.

The mating contact part 52 comprises a mating connection element 54 and a mating contact 56. In this case, the mating connection element 54 is configured to be complementary to the connection element 14. The mating connection element 54 can be configured as a threaded bush 55 with an internal thread 58, wherein the threaded section 16 is configured such that the threaded section 16 is engaged when it comes into contact with the internal thread 58 of the mating connection element 56. The mating contact 56 can be a busbar 4. Likewise, the mating contact 56 can be a combination of busbar 4 and contact socket 6.

The busbar 4 of the touch-protected contact part 1 and the busbar 4 of the mating contact part 52 can each have a wide longitudinal surface 8 pointing towards the other busbar 4. The busbars 4 can be aligned parallel to each other and can be spaced apart before making contact.

In the mating contact part 52, the mating connection element 54 is guided through an opening 60 of the mating contact 56 and protrudes above the surface of the busbar 4 against the plugging direction 10.

One embodiment provides a protective ring 62 made of non-conductive material, which is placed on the mating connection element 54 with the through-opening 64. The protective ring 62 can serve as finger protection during assembly. The protective ring 62 can have a slightly larger diameter than the mating connection element 54.

With the help of the touch protection 34 of the touch-protected contact part 1, the connection element 14 can be manually rotated about the axis of the plugging direction 10. The mating connection element 54 can be made from the same material as the connection element 14. The mating connection element 54 can be made of steel or of a material that contains steel. The mating contact 56 can be made from the same material as the contact element 2.

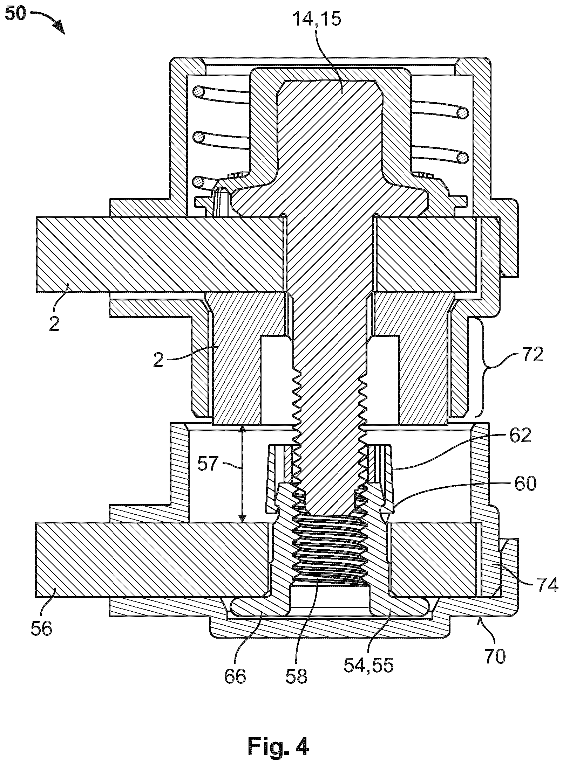

Fig. 4 shows the contact assembly 50 during initial contact during assembly. Fig. 4 illustrates that the connection element 14 with the pre-contact pin 18 comes into contact first with the mating connection element 54 of the mating contact part 52 and the contact element 2 and the mating contact 56 are still at a distance 57 from each other. In this case, the protective ring 62 can protect against possible sparks. The connection element 14 and the mating connection element 54 can thus form a pre-contact pair, while the contact element 2 and the mating contact 56 form a main contact pair.

The mating connection element 54 is configured in this embodiment such that a flange 66 is formed at the non-contacting end 68 of the mating connection element 54 and abuts against the surface of the busbar 4 on the non-contacting side 70 of the mating contact part.

After the initial contact of the connection element 14 with the mating connection element 54, the contact element 2 can now be connected with the mating contact 56 by manually screwing the connection element 14 into the mating connection element 54 via the touch protection 34.

The contact housing 24 of the touch-protected contact part 1 and the mating contact housing 74 can be configured in such a way that a housing section 72 of the contact housing 24 can be plugged into the mating contact housing 74 in sections and the housing section 72 thus has a smaller diameter than the mating contact housing 74. Alternatively, the mating contact housing 74 can have sections with a smaller diameter than the contact housing 24, so that the contact housing 24 can be plugged at least in sections over the mating contact housing 74.

In particular, the housing section 72 and the mating contact housing 74 can be configured in such a way that the connection from the connection element 14 to the mating connection element 54 and the connection from the contact element 2 to the mating contact 56 on the housing section 72 is guided along the plugging direction 10.

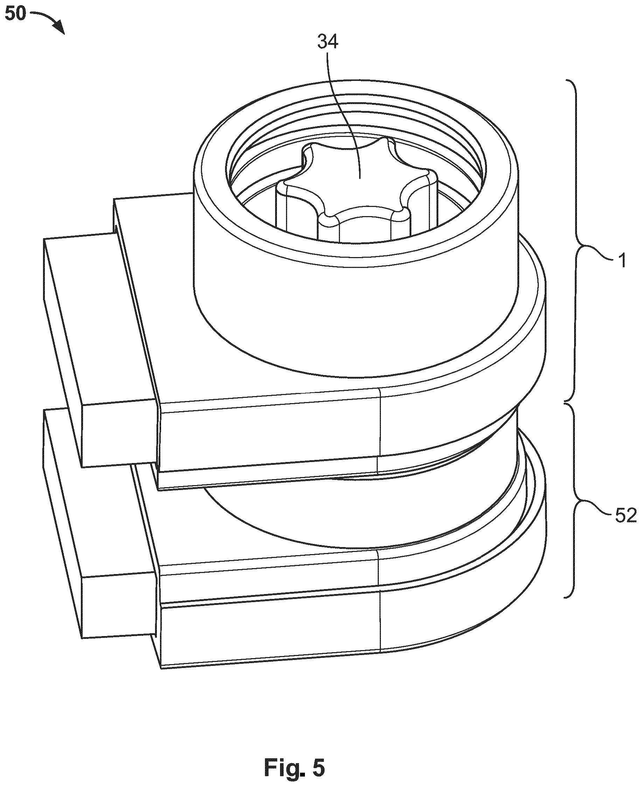

Fig. 5 shows the contact assembly 50 when the connection element 14 and mating connection element 54, as well as the contact element 2 and the mating contact 56, are fully contacted. An alternative embodiment provides that the connection element 14 is shorter than the contact element 2 and does not protrude from the contact element 2, while the mating connection element 54 is longer than the mating contact 56 and protrudes from the mating contact 56 and thus nevertheless ensures initial contact of the pre-contact pair. A configuration the other way around is also conceivable. Alternatively, the connection element 14 can be configured as a threaded bush 55 and the mating connection element 54 as a screw that is frictionally connected to the threaded bush 55.

### Reference Signs

- 1: touch-protected contact part
- 02: contact element
- 04: busbar
- 06: contact socket
- 08: longitudinal surface of the busbar
- 10: plugging direction
- 12: opening of the contact element
- 14: connection element, screw
- 15: screw
- 16: threaded section
- 18: pre-contact pin
- 20: diameter of the pre-contact pin
- 22: core diameter of the threaded section
- 24: contact housing
- 26: through-opening of the contact housing
- 28: spring element
- 30: plugging position of the connection element
- 32: spring force
- 34: touch protection
- 36: screw drive
- 38: non-contacting side of the contact part
- 40: non-contacting end of the connection element
- 41: flange
- 42: screw head
- 44: surface of the busbar
- 46: half of the contact housing with contact bush
- 48: Hälfte des Kontaktgehäuses mit dem Federelement
- 50: contact assembly
- 52: mating contact part
- 54: mating connection element
- 55: threaded bush
- 56: mating contact
- 57: distance main contact pair
- 58: internal thread
- 60: opening of the mating contact
- 62: protective ring
- 64: through-opening of the protective ring
- 66: flange of the mating connection element
- 70: non-contacting side of the mating contact part
- 72: housing section
- 74: mating contact housing

## Claims

1. Touch-protected contact part (1) for electrically connecting battery modules,
wherein the contact part (1) is configured to be connected with a mating contact part (52) in a plugging direction (10),
wherein the contact part (1) comprises a contact element (2) made from a first material,
a connection element (14) that penetrates the contact element (2) and that is electro-conductively connected with the contact element (2), and
a contact housing (24) that holds the contact element (2) and the connection element (14); wherein the connection element (14) is held in a plugging position (30) relative to the contact housing (24), in which the connection element (14) protrudes from the contact element (2) in the plugging direction (10), and
the part of the connection element (14) penetrating the contact element (2) and protruding from the contact element (2) is made from a second material that has a greater electrical resistance than the electrical resistance of the first material.

2. Touch-protected contact part (1) according to claim 1, wherein the first and second materials are first-class electrical conductors.

3. Touch-protected contact part (1) according to claim 2, wherein the first material comprises copper and/or aluminum and the second material comprises steel.

4. Touch-protected contact part (1) according to one of claims 1 to 3,
wherein the connection element (14) comprises a screw having a threaded section (16) and a pre-contact pin (18) adjoining the threaded section (16) in the plugging direction (10), and
wherein the diameter (20) of the pre-contact pin (18) is smaller than the core diameter (22) of the threaded section (16).

5. Touch-protected contact part (1) according to one of claims 1 to 4,
wherein the contact part (1) has a spring element (28) by means of which the connection element (14) is held resiliently in the plugging position (30) along the plugging direction (10).

6. Touch-protected contact part (1) according to claim 5,
wherein the spring element (28) is supported between the contact housing (24) and the connection element (14).

7. Touch-protected contact part (1) according to one of claims 1 to 6, wherein the contact element (2) comprises a busbar (4).

8. Touch-protected contact part (1) according to one of claims 1 to 7, wherein the contact element (2) comprises a contact socket (6).

9. Touch-protected contact part (1) according to one of claims 1 to 8, wherein the connection element (14) comprises a touch protection (34) made from an electrically insulating material, which surrounds the connection element (14) at its end (40) located opposite the plugging direction (10).

10. Contact assembly (50) for connecting battery modules,
with a touch-protected contact part (1) according to one of claims 1 to 9 and
with a mating contact part (52) which comprises a mating contact (56) configured to be brought into electrical contact with the contact element (2), a mating connection element (54) configured to complement the connection element (14) for connecting the contact part (1) and the mating contact part (52), which is electro-conductively connected with the mating contact (56), and
a mating contact housing (74) in which the contact element (2) and the mating connection element (54) are held.

11. Contact assembly (50) according to claim 10,
wherein the mating contact (56) is made from the first material and the mating connection element (54) is made from the second material.

12. Contact assembly (50) according to claim 10 or 11, wherein the mating connection element (54) comprises a threaded bush (55).

13. Contact assembly (50) according to one of claims 10 to 12, wherein the contact part (1) and the mating contact part (52) comprise housing sections (72) which can be plugged into one another and by means of which the contact part (1) and the mating contact part (52) are guided along the plugging direction (10) when plugged together.

14. Contact assembly (50) according to one of claims 10 to 13,
wherein the contact part (1) and the mating contact part (52) are configured to be plugged together in a plugging movement extending along the plugging direction (10), and
wherein, along the plugging movement until the contact element (2) and mating contact (56) make contact, the distance between the connection element (14) and the mating connection element is always smaller than the distance (57) between the contact element (2) and the mating contact (56).

15. Contact assembly (50) according to one of claims 10 to 14,
wherein the contact part (1) and the mating contact part (52) are configured to be plugged together in a plugging movement extending along the plugging direction (10), and
along the plugging movement, an electrical contact between the connection element (14) and the mating connection element (54) occurs before making an electrical contact between the contact element (2) and the mating contact (56).
